# EUROPEAN PATENT APPLICATION

(11) **EP 3 660 372 A1**
(43) Date of publication of application: **03.06.2020**
(21) Application number: 19212017.8
(22) Date of filing: 28.11.2019
(51) Int. Cl.: F16K 37/00

(54) **VALVE ACTUATOR CONFIGURED FOR PERFORMING A PARTIAL STROKE TEST AS WELL AS METHOD OF PERFORMING A PARTIAL STROKE TEST**

(30) Priority: 30.11.2018 US 201816205888
(71) Applicant: Johnson Controls Technology Company, Auburn Hills, Michigan 48326-2773 (US)
(72) Inventor: VETAL, Amol, 411014 Pune (IN); KHARCHE, Pankaj, 440015 Nagpur (IN); PASSONI, Marcello, 20871 Vimercate (IT)
(74) Representative: Trinks, Ole

(57) **Abstract**

Systems and methods for controlling an actuator (500) for an HVAC system are disclosed. A valve (504) is configured to be positioned in a conduit. An actuator (500) includes a motor (502) configured to rotate the valve between a first position and a second position. An actuator controller (506) identifies a condition for performing a partial stroke test of the valve. The actuator controller performs the partial stroke test for the valve. The actuator controller controls the motor to rotate the valve from the first position to a second position, and controls the motor to rotate the valve back to the first position.

## Description

### BACKGROUND

The present disclosure relates generally to actuators in a heating, ventilating, or air conditioning (HVAC) system and more particularly to maintaining a step count for a stepper motor of an HVAC actuator.

HVAC actuators are used to operate a wide variety of HVAC components, such as air dampers, fluid valves, air handling units, and other components that are typically used in HVAC systems. For example, an actuator may be coupled to a damper in an HVAC system and may be used to drive the damper between an open position and a closed position. An HVAC actuator typically includes a motor and a drive device (e.g., a hub, a drive train, etc.) that is driven by the motor and coupled to the HVAC component.

Some HVAC actuators may include a motor driving a valve. Some valves may operate within a conduit. The valves may be maintained in the same position for extended periods. Such extended periods may cause malfunction of the valves when the valve is attempted to be moved.

### SUMMARY

One implementation of the present disclosure is an actuator. The actuator includes a motor configured to rotate a valve positioned in a conduit. The actuator includes an actuator controller operatively connected to the motor. The actuator controller includes a processing circuit. The processing circuit includes a processor and memory. The memory is structured to store instructions that, when executed by the processor, cause the processor to perform operations. The operations include identifying a condition for performing a partial stroke test of the valve. The operations include performing the partial stroke test of the valve. The operations to perform the partial stroke test include controlling the motor to rotate the valve from a first position prior to the partial stroke test towards a second position. The operations to perform the partial stroke test include controlling the motor to rotate the valve back to the first position.

In some embodiments, the second position is within a dead space for the valve.

In some embodiments, controlling the motor to rotate the valve from the first position towards the second position and controlling the motor to rotate the valve back to the first position includes controlling the motor to rotate the valve from the first position prior to the partial stroke test towards the second position within the dead space for the valve and, while the valve is located in the dead space, controlling the motor to rotate the valve back to the first position, to maintain a fluid flow condition for the conduit during the partial stroke test of the valve.

In some embodiments, the operations further include monitoring a duration in which the valve is positioned in the first position. In some embodiments, the condition is the duration exceeding a threshold.

In some embodiments, the operations further include determining whether the valve moved from the first position towards the second position.

In some embodiments, controlling the motor to rotate the valve back to the first position is performed responsive to determining whether the valve moved from the first position towards the second position.

In some embodiments, the operations further include issuing one or more notifications indicating a malfunction of the valve based on the partial stroke test.

In some embodiments, determining whether the valve moved from the first position towards the second position includes monitoring an armature position of the motor and determining, based a change in the armature position, that the valve moved from the first position towards the second position.

Another implementation of the present disclosure includes a system. The system includes a valve configured to be positioned in a conduit and having a range of motion. The system includes an actuator including a motor configured to rotate the valve between a stopping position for a first position at one end of the range of motion and a stopping position for a second position at an opposite end of the range of motion. The system includes an actuator controller operatively connected to the motor. The actuator controller includes a processing circuit. The processing circuit includes a processor and memory. The memory is structured to store instructions that, when executed by the processor, cause the processor to perform operations. The operations include identifying a condition for performing a partial stroke test of the valve. The operations include performing the partial stroke test of the valve. The operations to perform the partial stroke test include controlling the motor to rotate the valve from the first position towards a second position. The operations to perform the partial stroke test include controlling the motor to rotate the valve back to the first position.

In some embodiments, the valve is rotated from the first position towards the second position and back to the first position while maintained in a dead space for the valve during the partial stroke test.

In some embodiments, while the valve is maintained in the dead space, a fluid flow condition for the conduit is maintained during the partial stroke test of the valve.

In some embodiments, the operations further include monitoring a duration in which the valve is positioned in the first position. In some embodiments, the condition is the duration exceeding a threshold.

In some embodiments, the operations further include determine whether the valve moved from the first position towards the second position. In some embodiments, controlling the motor to rotate the valve back to the first position is performed responsive to determining whether the valve moved from the first position towards the second position.

In some embodiments, determining whether the valve moved from the first position towards the second position includes monitoring an armature position of the motor and determining, based a change in the armature position, that the valve moved from the first position towards the second position.

Another implementation of the present disclosure includes a method of controlling an actuator. The method includes identifying a condition for performing a partial stroke test of a valve positioned in a conduit. The method includes performing the partial stroke test of the valve within a dead space of the valve to maintain a fluid flow condition of the conduit. Performing the partial stroke test includes controlling a motor of an actuator. The motor is configured to drive the valve. The motor is controlled to rotate the valve from a first position prior to the partial stroke test towards a second position. Performing the partial stroke test includes controlling the motor to rotate the valve back to the first position.

In some embodiments, the method further includes monitoring a duration in which the valve is positioned in the first position. In some embodiments, the condition is the duration exceeding a threshold.

In some embodiments, the method further includes determining whether the valve moved from the first position towards the second position.

In some embodiments, controlling the motor to rotate the valve back to the first position is performed responsive to determining whether the valve moved from the first position towards the second position.

In some embodiments, the method further includes issuing one or more notifications indicating a malfunction of the valve based on the partial stroke test.

In some embodiments, determining whether the valve moved from the first position towards the second position includes monitoring an armature position of the motor and determining, based a change in the armature position, that the valve moved from the first position towards the second position.

Those skilled in the art will appreciate that the summary is illustrative only and is not intended to be in any way limiting. Other aspects, inventive features, and advantages of the devices and/or processes described herein, as defined solely by the claims, will become apparent in the detailed description set forth herein and taken in conjunction with the accompanying drawings.

### BRIEF DESCRIPTION OF THE DRAWINGS

FIG. 1 is a drawing of a building equipped with a heating, ventilating, or air conditioning (HVAC) system and a building management system (BMS), according to an exemplary embodiment.
FIG. 2 is a schematic diagram of a waterside system which may be used to support the HVAC system of FIG. 1, according to an exemplary embodiment.
FIG. 3 is a block diagram of an airside system which may be used as part of the HVAC system of FIG. 1, according to an exemplary embodiment.
FIG. 4 is a block diagram of a BMS which may be implemented in the building of FIG. 1, according to an exemplary embodiment.
FIG. 5 is a view of an actuator which may be used in the HVAC system of FIG. 1, the waterside system of FIG. 2, the airside system of FIG. 3, or the BMS of FIG. 4 to control an HVAC component, according to an exemplary embodiment.
FIG. 6 is an example schematic diagram of an actuator controller for the actuator of FIG. 5, according to an exemplary embodiment.
FIG. 7 is a graph depicting measurements from a BEMF circuit for the actuator of FIG. 5, according to an exemplary embodiment.
FIG. 8 is a flowchart of a process for reflecting a step count for a stepper motor of the actuator of FIG. 5, according to an exemplary embodiment.
FIG. 9 is a fail-safe device for the actuator of FIG. 5, according to an exemplary embodiment.
FIG. 10 is a flowchart of a process for controlling the actuator of FIG. 5 in the event of a fail-safe condition, according to an exemplary embodiment
FIG. 11 is a state diagram of an NFC device of the actuator of FIG. 5, according to an exemplary embodiment.
FIG. 12 is a flowchart of a process for controlling the actuator of FIG. 5 via an NFC device, according to an exemplary embodiment.
FIG. 13 is an example interface for controlling the actuator of FIG. 5 via the NFC device, according to an exemplary embodiment.
FIG. 14 is an example initial calibration test system for the actuator of FIG. 5, according to an exemplary embodiment.
FIG. 15 is a flowchart of a process for calibrating the actuator of FIG. 5 via a universal asynchronous receiver-transmitter (UART), according to an exemplary embodiment.
FIG. 16 is a partial stroke test of a movable HVAC component operated by the actuator of FIG. 5, according to an exemplary embodiment
FIG. 17 is a flowchart of a process of partially stroking a valve operated by the actuator of FIG. 5, according to an exemplary embodiment.

### DETAILED DESCRIPTION

Referring generally to the FIGURES, an HVAC actuator is shown, according to an exemplary embodiment. The actuator may be a damper actuator, a valve actuator, a fan actuator, a pump actuator, or any other type of actuator that can be used in an HVAC or other system.

The actuator includes a stepper motor and a drive device driven by the stepper motor. The stepper motor is coupled to a movable HVAC component for driving the movable HVAC component between multiple positions. The actuator may include an actuator controller. The actuator controller may control the actuator to perform a partial stroke test of the valve. The actuator controller may control the actuator to perform the partial stroke test of the valve at intervals to ensure proper functioning of the valve. The partial stroke test may partially move the valve from a current position of the vale. For instance, the valve may be moved from a fully open to a fully closed position. The valve may be moved within the dead space.

The aspects described herein may increase the reliability of valves. For instance, where a valve is not stroked for an extended period of time, various sediments and particles may build up at a juncture between the valve and a valve seat (e.g., a housing within which the valve rotates). As the sediments and particles build up at the juncture, the build-up may restrict or inhibit rotation of the valve. Such embodiments may increase the reliability by partially stroking the valve at intervals, thus eliminating the likelihood of build-up at the juncture between the valve and the valve seat. Various other benefits of the present disclosure will become apparent as follows.

### Building Management System and HVAC System

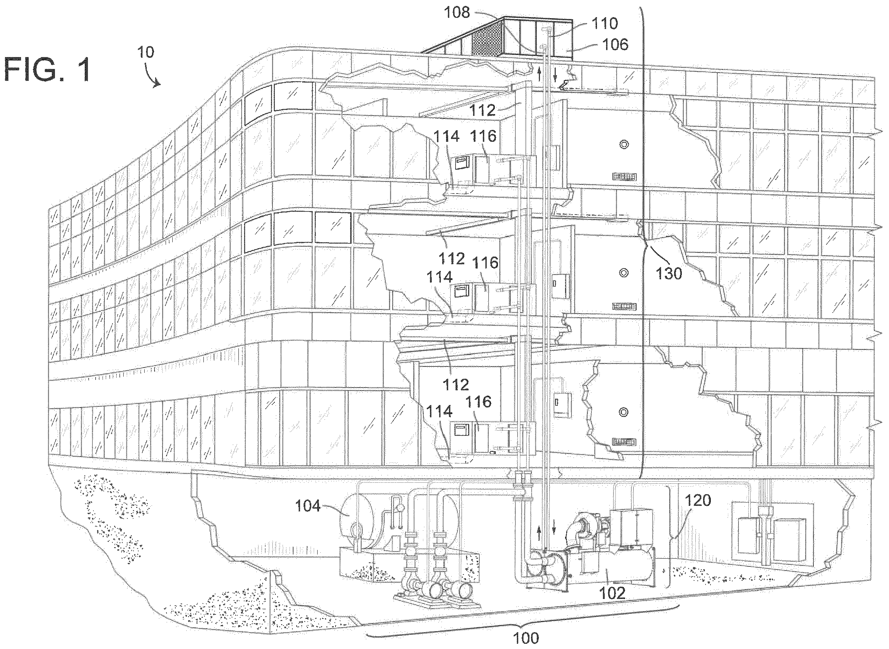

Referring now to FIGS. 1-4, an exemplary building management system (BMS) and HVAC system in which the systems and methods of the present disclosure may be implemented are shown, according to an exemplary embodiment. Referring particularly to FIG. 1, a perspective view of a building 10 is shown. Building 10 is served by a BMS. A BMS is, in general, a system of devices configured to control, monitor, and manage equipment in or around a building or building area. A BMS may include, for example, an HVAC system, a security system, a lighting system, a fire alerting system, any other system that is capable of managing building functions or devices, or any combination thereof.

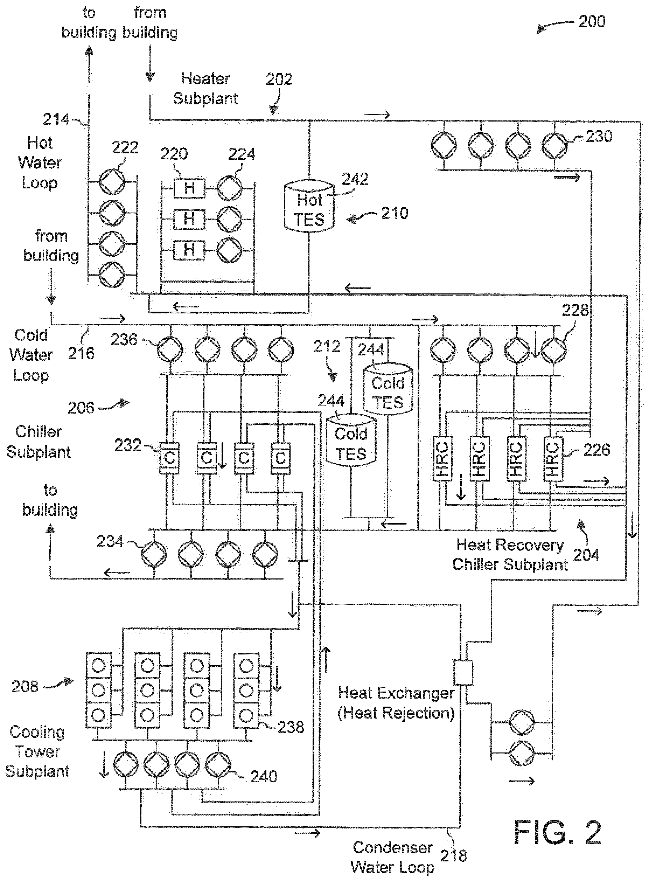

The BMS that serves building 10 includes an HVAC system 100. HVAC system 100 may include a plurality of HVAC devices (e.g., heaters, chillers, air handling units, pumps, fans, thermal energy storage, etc.) configured to provide heating, cooling, ventilation, or other services for building 10. For example, HVAC system 100 is shown to include a waterside system 120 and an airside system 130. Waterside system 120 may provide heated or chilled fluid to an air handling unit of airside system 130. Airside system 130 may use the heated or chilled fluid to heat or cool an airflow provided to building 10. An exemplary waterside system and airside system which may be used in HVAC system 100 are described in greater detail with reference to FIGS. 2-3.

HVAC system 100 is shown to include a chiller 102, a boiler 104, and a rooftop air handling unit (AHU) 106. Waterside system 120 may use boiler 104 and chiller 102 to heat or cool a working fluid (e.g., water, glycol, etc.) and may circulate the working fluid to AHU 106. In various embodiments, the HVAC devices of waterside system 120 may be located in or around building 10 (as shown in FIG. 1) or at an offsite location such as a central plant (e.g., a chiller plant, a steam plant, a heat plant, etc.). The working fluid may be heated in boiler 104 or cooled in chiller 102, depending on whether heating or cooling is required in building 10. Boiler 104 may add heat to the circulated fluid, for example, by burning a combustible material (e.g., natural gas) or using an electric heating element. Chiller 102 may place the circulated fluid in a heat exchange relationship with another fluid (e.g., a refrigerant) in a heat exchanger (e.g., an evaporator) to absorb heat from the circulated fluid. The working fluid from chiller 102 and/or boiler 104 may be transported to AHU 106 via piping 108.

AHU 106 may place the working fluid in a heat exchange relationship with an airflow passing through AHU 106 (e.g., via one or more stages of cooling coils and/or heating coils). The airflow may be, for example, outside air, return air from within building 10, or a combination of both. AHU 106 may transfer heat between the airflow and the working fluid to provide heating or cooling for the airflow. For example, AHU 106 may include one or more fans or blowers configured to pass the airflow over or through a heat exchanger containing the working fluid. The working fluid may then return to chiller 102 or boiler 104 via piping 110.

Airside system 130 may deliver the airflow supplied by AHU 106 (i.e., the supply airflow) to building 10 via air supply ducts 112 and may provide return air from building 10 to AHU 106 via air return ducts 114. In some embodiments, airside system 130 includes multiple variable air volume (VAV) units 116. For example, airside system 130 is shown to include a separate VAV unit 116 on each floor or zone of building 10. VAV units 116 may include dampers or other flow control elements that may be operated to control an amount of the supply airflow provided to individual zones of building 10. In other embodiments, airside system 130 delivers the supply airflow into one or more zones of building 10 (e.g., via supply ducts 112) without using intermediate VAV units 116 or other flow control elements. AHU 106 may include various sensors (e.g., temperature sensors, pressure sensors, etc.) configured to measure attributes of the supply airflow. AHU 106 may receive input from sensors located within AHU 106 and/or within the building zone and may adjust the flow rate, temperature, or other attributes of the supply airflow through AHU 106 to achieve set point conditions for the building zone.

Referring now to FIG. 2, a block diagram of a waterside system 200 is shown, according to an exemplary embodiment. In various embodiments, waterside system 200 may supplement or replace waterside system 120 in HVAC system 100 or may be implemented separate from HVAC system 100. When implemented in HVAC system 100, waterside system 200 may include a subset of the HVAC devices in HVAC system 100 (e.g., boiler 104, chiller 102, pumps, valves, etc.) and may operate to supply a heated or chilled fluid to AHU 106. The HVAC devices of waterside system 200 may be located within building 10 (e.g., as components of waterside system 120) or at an offsite location such as a central plant.

In FIG. 2, waterside system 200 is shown as a central plant having a plurality of subplants 202-212. Subplants 202-212 are shown to include a heater subplant 202, a heat recovery chiller subplant 204, a chiller subplant 206, a cooling tower subplant 208, a hot thermal energy storage (TES) subplant 210, and a cold thermal energy storage (TES) subplant 212. Subplants 202-212 consume resources (e.g., water, natural gas, electricity, etc.) from utilities to serve the thermal energy loads (e.g., hot water, cold water, heating, cooling, etc.) of a building or campus. For example, heater subplant 202 may be configured to heat water in a hot water loop 214 that circulates the hot water between heater subplant 202 and building 10. Chiller subplant 206 may be configured to chill water in a cold water loop 216 that circulates the cold water between chiller subplant 206 and building 10. Heat recovery chiller subplant 204 may be configured to transfer heat from cold water loop 216 to hot water loop 214 to provide additional heating for the hot water and additional cooling for the cold water. Condenser water loop 218 may absorb heat from the cold water in chiller subplant 206 and reject the absorbed heat in cooling tower subplant 208 or transfer the absorbed heat to hot water loop 214. Hot TES subplant 210 and cold TES subplant 212 may store hot and cold thermal energy, respectively, for subsequent use.

Hot water loop 214 and cold water loop 216 may deliver the heated and/or chilled water to air handlers located on the rooftop of building 10 (e.g., AHU 106) or to individual floors or zones of building 10 (e.g., VAV units 116). The air handlers push air past heat exchangers (e.g., heating coils or cooling coils) through which the water flows to provide heating or cooling for the air. The heated or cooled air may be delivered to individual zones of building 10 to serve the thermal energy loads of building 10. The water then returns to subplants 202-212 to receive further heating or cooling.

Although subplants 202-212 are shown and described as heating and cooling water for circulation to a building, it is understood that any other type of working fluid (e.g., glycol, CO2, etc.) may be used in place of or in addition to water to serve the thermal energy loads. In other embodiments, subplants 202-212 may provide heating and/or cooling directly to the building or campus without requiring an intermediate heat transfer fluid. These and other variations to waterside system 200 are within the teachings of the present disclosure.

Each of subplants 202-212 may include a variety of equipment configured to facilitate the functions of the subplant. For example, heater subplant 202 is shown to include a plurality of heating elements 220 (e.g., boilers, electric heaters, etc.) configured to add heat to the hot water in hot water loop 214. Heater subplant 202 is also shown to include several pumps 222 and 224 configured to circulate the hot water in hot water loop 214 and to control the flow rate of the hot water through individual heating elements 220. Chiller subplant 206 is shown to include a plurality of chillers 232 configured to remove heat from the cold water in cold water loop 216. Chiller subplant 206 is also shown to include several pumps 234 and 236 configured to circulate the cold water in cold water loop 216 and to control the flow rate of the cold water through individual chillers 232.

Heat recovery chiller subplant 204 is shown to include a plurality of heat recovery heat exchangers 226 (e.g., refrigeration circuits) configured to transfer heat from cold water loop 216 to hot water loop 214. Heat recovery chiller subplant 204 is also shown to include several pumps 228 and 230 configured to circulate the hot water and/or cold water through heat recovery heat exchangers 226 and to control the flow rate of the water through individual heat recovery heat exchangers 226. Cooling tower subplant 208 is shown to include a plurality of cooling towers 238 configured to remove heat from the condenser water in condenser water loop 218. Cooling tower subplant 208 is also shown to include several pumps 240 configured to circulate the condenser water in condenser water loop 218 and to control the flow rate of the condenser water through individual cooling towers 238.

Hot TES subplant 210 is shown to include a hot TES tank 242 configured to store the hot water for later use. Hot TES subplant 210 may also include one or more pumps or valves configured to control the flow rate of the hot water into or out of hot TES tank 242. Cold TES subplant 212 is shown to include cold TES tanks 244 configured to store the cold water for later use. Cold TES subplant 212 may also include one or more pumps or valves configured to control the flow rate of the cold water into or out of cold TES tanks 244.

In some embodiments, one or more of the pumps in waterside system 200 (e.g., pumps 222, 224, 228, 230, 234, 236, and/or 240) or pipelines in waterside system 200 include an isolation valve associated therewith. Isolation valves may be integrated with the pumps or positioned upstream or downstream of the pumps to control the fluid flows in waterside system 200. In various embodiments, waterside system 200 may include more, fewer, or different types of devices and/or subplants based on the particular configuration of waterside system 200 and the types of loads served by waterside system 200.

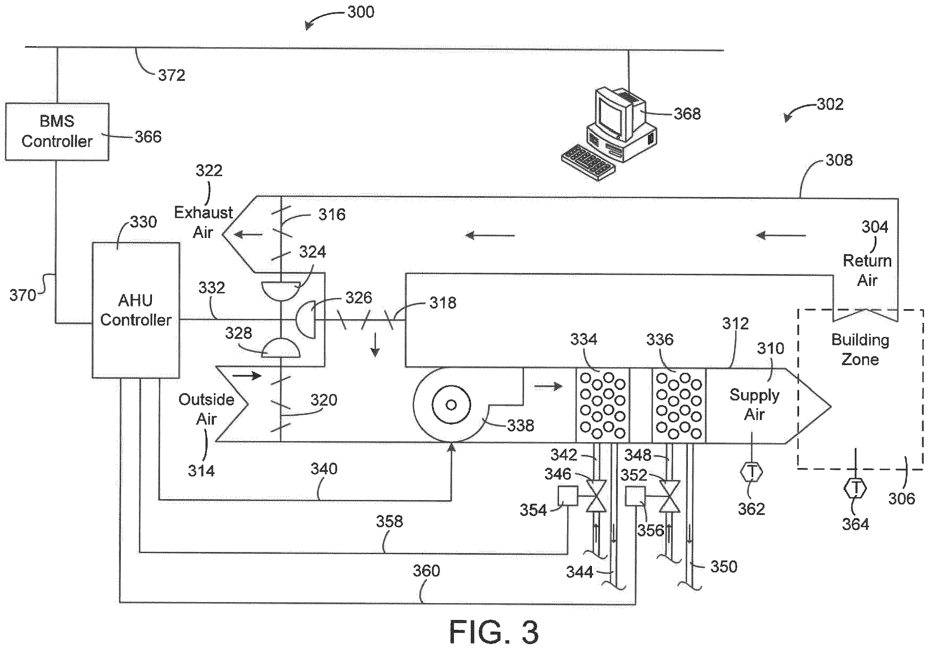

Referring now to FIG. 3, a block diagram of an airside system 300 is shown, according to an exemplary embodiment. In various embodiments, airside system 300 may supplement or replace airside system 130 in HVAC system 100 or may be implemented separate from HVAC system 100. When implemented in HVAC system 100, airside system 300 may include a subset of the HVAC devices in HVAC system 100 (e.g., AHU 106, VAV units 116, ducts 112-114, fans, dampers, etc.) and may be located in or around building 10. Airside system 300 may operate to heat or cool an airflow provided to building 10 using a heated or chilled fluid provided by waterside system 200.

In FIG. 3, airside system 300 is shown to include an economizer-type AHU 302. Economizer-type AHUs vary the amount of outside air and return air used by the air handling unit for heating or cooling. For example, AHU 302 may receive return air 304 from building zone 306 via return air duct 308 and may deliver supply air 310 to building zone 306 via supply air duct 312. In some embodiments, AHU 302 is a rooftop unit located on the roof of building 10 (e.g., AHU 106 as shown in FIG. 1) or otherwise positioned to receive both return air 304 and outside air 314. AHU 302 may be configured to operate exhaust air damper 316, mixing damper 318, and outside air damper 320 to control an amount of outside air 314 and return air 304 that combine to form supply air 310. Any return air 304 that does not pass through mixing damper 318 may be exhausted from AHU 302 through exhaust damper 316 as exhaust air 322.

Each of dampers 316-320 may be operated by an actuator. For example, exhaust air damper 316 may be operated by actuator 324, mixing damper 318 may be operated by actuator 326, and outside air damper 320 may be operated by actuator 328. Actuators 324-328 may communicate with an AHU controller 330 via a communications link 332. Actuators 324-328 may receive control signals from AHU controller 330 and may provide feedback signals to AHU controller 330. Feedback signals may include, for example, an indication of a current actuator or damper position, an amount of torque or force exerted by the actuator, diagnostic information (e.g., results of diagnostic tests performed by actuators 324-328), status information, commissioning information, configuration settings, calibration data, and/or other types of information or data that may be collected, stored, or used by actuators 324-328. AHU controller 330 may be an economizer controller configured to use one or more control algorithms (e.g., state-based algorithms, extremum seeking control (ESC) algorithms, proportional-integral (PI) control algorithms, proportional-integral-derivative (PID) control algorithms, model predictive control (MPC) algorithms, feedback control algorithms, etc.) to control actuators 324-328.

Still referring to FIG. 3, AHU 302 is shown to include a cooling coil 334, a heating coil 336, and a fan 338 positioned within supply air duct 312. Fan 338 may be configured to force supply air 310 through cooling coil 334 and/or heating coil 336 and provide supply air 310 to building zone 306. AHU controller 330 may communicate with fan 338 via communications link 340 to control a flow rate of supply air 310. In some embodiments, AHU controller 330 controls an amount of heating or cooling applied to supply air 310 by modulating a speed of fan 338.

Cooling coil 334 may receive a chilled fluid from waterside system 200 (e.g., from cold water loop 216) via piping 342 and may return the chilled fluid to waterside system 200 via piping 344. Valve 346 may be positioned along piping 342 or piping 344 to control a flow rate of the chilled fluid through cooling coil 334. In some embodiments, cooling coil 334 includes multiple stages of cooling coils that may be independently activated and deactivated (e.g., by AHU controller 330, by BMS controller 366, etc.) to modulate an amount of cooling applied to supply air 310.

Heating coil 336 may receive a heated fluid from waterside system 200 (e.g., from hot water loop 214) via piping 348 and may return the heated fluid to waterside system 200 via piping 350. Valve 352 may be positioned along piping 348 or piping 350 to control a flow rate of the heated fluid through heating coil 336. In some embodiments, heating coil 336 includes multiple stages of heating coils that may be independently activated and deactivated (e.g., by AHU controller 330, by BMS controller 366, etc.) to modulate an amount of heating applied to supply air 310.

Each of valves 346 and 352 may be controlled by an actuator. For example, valve 346 may be controlled by actuator 354 and valve 352 may be controlled by actuator 356. Actuators 354-356 may communicate with AHU controller 330 via communications links 358-360. Actuators 354-356 may receive control signals from AHU controller 330 and may provide feedback signals to controller 330. In some embodiments, AHU controller 330 receives a measurement of the supply air temperature from a temperature sensor 362 positioned in supply air duct 312 (e.g., downstream of cooling coil 334 and/or heating coil 336). AHU controller 330 may also receive a measurement of the temperature of building zone 306 from a temperature sensor 364 located in building zone 306.

In some embodiments, AHU controller 330 operates valves 346 and 352 via actuators 354-356 to modulate an amount of heating or cooling provided to supply air 310 (e.g., to achieve a setpoint temperature for supply air 310 or to maintain the temperature of supply air 310 within a setpoint temperature range). The positions of valves 346 and 352 affect the amount of heating or cooling provided to supply air 310 by cooling coil 334 or heating coil 336 and may correlate with the amount of energy consumed to achieve a desired supply air temperature. AHU controller 330 may control the temperature of supply air 310 and/or building zone 306 by activating or deactivating coils 334-336, adjusting a speed of fan 338, or a combination of both.

Still referring to FIG. 3, airside system 300 is shown to include a BMS controller 366 and a client device 368. BMS controller 366 may include one or more computer systems (e.g., servers, supervisory controllers, subsystem controllers, etc.) that serve as system-level controllers, application or data servers, head nodes, or master controllers for airside system 300, waterside system 200, HVAC system 100, and/or other controllable systems that serve building 10. BMS controller 366 may communicate with multiple downstream building systems or subsystems (e.g., HVAC system 100, a security system, a lighting system, waterside system 200, etc.) via a communications link 370 according to like or disparate protocols (e.g., LON, BACnet, etc.). In various embodiments, AHU controller 330 and BMS controller 366 may be separate (as shown in FIG. 3) or integrated. In an integrated implementation, AHU controller 330 may be a software module configured for execution by a processor of BMS controller 366.

In some embodiments, AHU controller 330 receives information from BMS controller 366 (e.g., commands, setpoints, operating boundaries, etc.) and provides information to BMS controller 366 (e.g., temperature measurements, valve or actuator positions, operating statuses, diagnostics, etc.). For example, AHU controller 330 may provide BMS controller 366 with temperature measurements from temperature sensors 362-364, equipment on/off states, equipment operating capacities, and/or any other information that may be used by BMS controller 366 to monitor or control a variable state or condition within building zone 306.

Client device 368 may include one or more human-machine interfaces or client interfaces (e.g., graphical user interfaces, reporting interfaces, text-based computer interfaces, client-facing web services, web servers that provide pages to web clients, etc.) for controlling, viewing, or otherwise interacting with HVAC system 100, its subsystems, and/or devices. Client device 368 may be a computer workstation, a client terminal, a remote or local interface, or any other type of user interface device. Client device 368 may be a stationary terminal or a mobile device. For example, client device 368 may be a desktop computer, a computer server with a user interface, a laptop computer, a tablet, a smartphone, a PDA, or any other type of mobile or non-mobile device. Client device 368 may communicate with BMS controller 366 and/or AHU controller 330 via communications link 372.

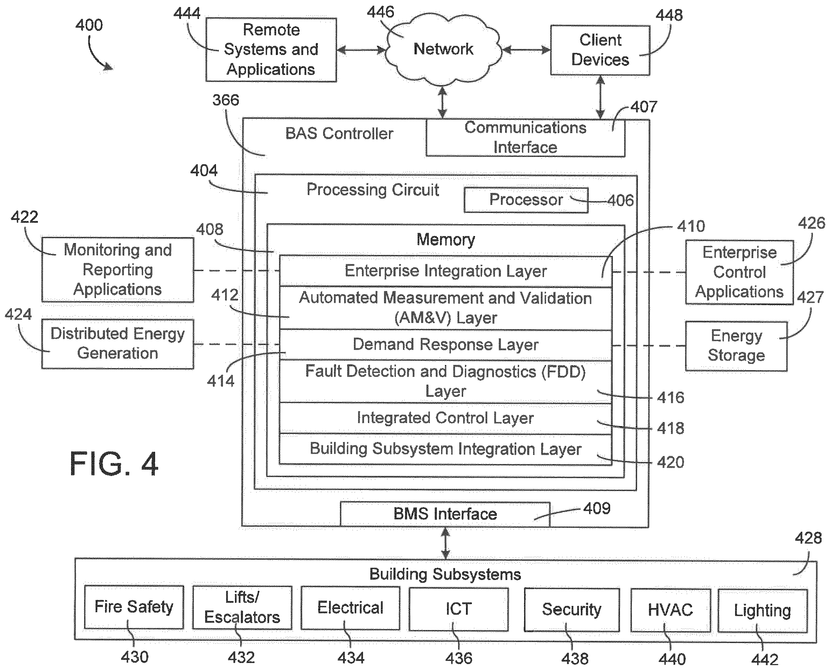

Referring now to FIG. 4, a block diagram of a BMS 400 is shown, according to an exemplary embodiment. BMS 400 may be implemented in building 10 to automatically monitor and control various building functions. BMS 400 is shown to include BMS controller 366 and a plurality of building subsystems 428. Building subsystems 428 are shown to include a building electrical subsystem 434, an information communication technology (ICT) subsystem 436, a security subsystem 438, an HVAC subsystem 440, a lighting subsystem 442, a lift/escalators subsystem 432, and a fire safety subsystem 430. In various embodiments, building subsystems 428 may include fewer, additional, or alternative subsystems. For example, building subsystems 428 may also or alternatively include a refrigeration subsystem, an advertising or signage subsystem, a cooking subsystem, a vending subsystem, a printer or copy service subsystem, or any other type of building subsystem that uses controllable equipment and/or sensors to monitor or control building 10. In some embodiments, building subsystems 428 include waterside system 200 and/or airside system 300, as described with reference to FIGS. 2-3.

Each of building subsystems 428 may include any number of devices, controllers, and connections for completing its individual functions and control activities. HVAC subsystem 440 may include many of the same components as HVAC system 100, as described with reference to FIGS. 1-3. For example, HVAC subsystem 440 may include any number of chillers, heaters, handling units, economizers, field controllers, supervisory controllers, actuators, temperature sensors, and/or other devices for controlling the temperature, humidity, airflow, or other variable conditions within building 10. Lighting subsystem 442 may include any number of light fixtures, ballasts, lighting sensors, dimmers, or other devices configured to controllably adjust the amount of light provided to a building space. Security subsystem 438 may include occupancy sensors, video surveillance cameras, digital video recorders, video processing servers, intrusion detection devices, access control devices and servers, or other security-related devices.

Still referring to FIG. 4, BMS controller 366 is shown to include a communications interface 407 and a BMS interface 409. Interface 407 may facilitate communications between BMS controller 366 and external applications (e.g., monitoring and reporting applications 422, enterprise control applications 426, remote systems and applications 444, applications residing on client devices 448, etc.) for allowing user control, monitoring, and adjustment to BMS controller 366 and/or subsystems 428. Interface 407 may also facilitate communications between BMS controller 366 and client devices 448. BMS interface 409 may facilitate communications between BMS controller 366 and building subsystems 428 (e.g., HVAC, lighting security, lifts, power distribution, business, etc.).

Interfaces 407 and 409 may be or may include wired or wireless communications interfaces (e.g., jacks, antennas, transmitters, receivers, transceivers, wire terminals, etc.) for conducting data communications with building subsystems 428 or other external systems or devices. In various embodiments, communications via interfaces 407 and 409 may be direct (e.g., local wired or wireless communications) or via a communications network 446 (e.g., a WAN, the Internet, a cellular network, etc.). For example, interfaces 407 and 409 may include an Ethernet card and port for sending and receiving data via an Ethernet-based communications link or network. In another example, interfaces 407 and 409 may include a WiFi transceiver for communicating via a wireless communications network. In another example, one or both of interfaces 407 and 409 may include cellular or mobile phone communications transceivers. In one embodiment, communications interface 407 is a power line communications interface and BMS interface 409 is an Ethernet interface. In other embodiments, both communications interface 407 and BMS interface 409 are Ethernet interfaces or are the same Ethernet interface.

Still referring to FIG. 4, BMS controller 366 is shown to include a processing circuit 404 including a processor 406 and memory 408. Processing circuit 404 may be communicably connected to BMS interface 409 and/or communications interface 407 such that processing circuit 404 and the various components thereof may send and receive data via interfaces 407 and 409. Processor 406 may be implemented as a general purpose processor, an application specific integrated circuit (ASIC), one or more field programmable gate arrays (FPGAs), a group of processing components, or other suitable electronic processing components.

Memory 408 (e.g., memory, memory unit, storage device, etc.) may include one or more devices (e.g., RAM, ROM, Flash memory, hard disk storage, etc.) for storing data and/or computer code for completing or facilitating the various processes, layers, and modules described in the present application. Memory 408 may be or include volatile memory or non-volatile memory. Memory 408 may include database components, object code components, script components, or any other type of information structure for supporting the various activities and information structures described in the present application. According to an exemplary embodiment, memory 408 is communicably connected to processor 406 via processing circuit 404 and includes computer code for executing (e.g., by processing circuit 404 and/or processor 406) one or more processes described herein.

In some embodiments, BMS controller 366 is implemented within a single computer (e.g., one server, one housing, etc.). In various other embodiments, BMS controller 366 may be distributed across multiple servers or computers (e.g., that may exist in distributed locations). Further, while FIG. 4 shows applications 422 and 426 as existing outside of BMS controller 366, in some embodiments, applications 422 and 426 may be hosted within BMS controller 366 (e.g., within memory 408).

Still referring to FIG. 4, memory 408 is shown to include an enterprise integration layer 410, an automated measurement and validation (AM&V) layer 412, a demand response (DR) layer 414, a fault detection and diagnostics (FDD) layer 416, an integrated control layer 418, and a building subsystem integration later 420. Layers 410-420 may be configured to receive inputs from building subsystems 428 and other data sources, determine optimal control actions for building subsystems 428 based on the inputs, generate control signals based on the optimal control actions, and provide the generated control signals to building subsystems 428. The following paragraphs describe some of the general functions performed by each of layers 410-420 in BMS 400.

Enterprise integration layer 410 may be configured to serve clients or local applications with information and services to support a variety of enterprise-level applications. For example, enterprise control applications 426 may be configured to provide subsystem-spanning control to a graphical user interface (GUI) or to any number of enterprise-level business applications (e.g., accounting systems, user identification systems, etc.). Enterprise control applications 426 may also or alternatively be configured to provide configuration GUIs for configuring BMS controller 366. In yet other embodiments, enterprise control applications 426 may work with layers 410-420 to optimize building performance (e.g., efficiency, energy use, comfort, or safety) based on inputs received at interface 407 and/or BMS interface 409.

Building subsystem integration layer 420 may be configured to manage communications between BMS controller 366 and building subsystems 428. For example, building subsystem integration layer 420 may receive sensor data and input signals from building subsystems 428 and provide output data and control signals to building subsystems 428. Building subsystem integration layer 420 may also be configured to manage communications between building subsystems 428. Building subsystem integration layer 420 translates communications (e.g., sensor data, input signals, output signals, etc.) across a plurality of multi-vendor/multi-protocol systems.

Demand response layer 414 may be configured to optimize resource usage (e.g., electricity use, natural gas use, water use, etc.) and/or the monetary cost of such resource usage in response to satisfy the demand of building 10. The optimization may be based on time-of-use prices, curtailment signals, energy availability, or other data received from utility providers, distributed energy generation systems 424, from energy storage 427 (e.g., hot TES 242, cold TES 244, etc.), or from other sources. Demand response layer 414 may receive inputs from other layers of BMS controller 366 (e.g., building subsystem integration layer 420, integrated control layer 418, etc.). The inputs received from other layers may include environmental or sensor inputs such as temperature, carbon dioxide levels, relative humidity levels, air quality sensor outputs, occupancy sensor outputs, room schedules, and the like. The inputs may also include inputs such as electrical use (e.g., expressed in kWh), thermal load measurements, pricing information, projected pricing, smoothed pricing, curtailment signals from utilities, and the like.

According to an exemplary embodiment, demand response layer 414 includes control logic for responding to the data and signals it receives. These responses may include communicating with the control algorithms in integrated control layer 418, changing control strategies, changing setpoints, or activating/deactivating building equipment or subsystems in a controlled manner. Demand response layer 414 may also include control logic configured to determine when to utilize stored energy. For example, demand response layer 414 may determine to begin using energy from energy storage 427 just prior to the beginning of a peak use hour.

In some embodiments, demand response layer 414 includes a control module configured to actively initiate control actions (e.g., automatically changing setpoints) which minimize energy costs based on one or more inputs representative of or based on demand (e.g., price, a curtailment signal, a demand level, etc.). In some embodiments, demand response layer 414 uses equipment models to determine an optimal set of control actions. The equipment models may include, for example, thermodynamic models describing the inputs, outputs, and/or functions performed by various sets of building equipment. Equipment models may represent collections of building equipment (e.g., subplants, chiller arrays, etc.) or individual devices (e.g., individual chillers, heaters, pumps, etc.).

Demand response layer 414 may further include or draw upon one or more demand response policy definitions (e.g., databases, XML files, etc.). The policy definitions may be edited or adjusted by a user (e.g., via a graphical user interface) so that the control actions initiated in response to demand inputs may be tailored for the user's application, desired comfort level, particular building equipment, or based on other concerns. For example, the demand response policy definitions may specify which equipment may be turned on or off in response to particular demand inputs, how long a system or piece of equipment should be turned off, what setpoints may be changed, what the allowable set point adjustment range is, how long to hold a high demand setpoint before returning to a normally scheduled setpoint, how close to approach capacity limits, which equipment modes to utilize, the energy transfer rates (e.g., the maximum rate, an alarm rate, other rate boundary information, etc.) into and out of energy storage devices (e.g., thermal storage tanks, battery banks, etc.), and when to dispatch on-site generation of energy (e.g., via fuel cells, a motor generator set, etc.).

Integrated control layer 418 may be configured to use the data input or output of building subsystem integration layer 420 and/or demand response later 414 to make control decisions. Due to the subsystem integration provided by building subsystem integration layer 420, integrated control layer 418 may integrate control activities of the subsystems 428 such that the subsystems 428 behave as a single integrated supersystem. In an exemplary embodiment, integrated control layer 418 includes control logic that uses inputs and outputs from a plurality of building subsystems to provide greater comfort and energy savings relative to the comfort and energy savings that separate subsystems could provide alone. For example, integrated control layer 418 may be configured to use an input from a first subsystem to make an energy-saving control decision for a second subsystem. Results of these decisions may be communicated back to building subsystem integration layer 420.

Integrated control layer 418 is shown to be logically below demand response layer 414. Integrated control layer 418 may be configured to enhance the effectiveness of demand response layer 414 by enabling building subsystems 428 and their respective control loops to be controlled in coordination with demand response layer 414. This configuration may advantageously reduce disruptive demand response behavior relative to conventional systems. For example, integrated control layer 418 may be configured to assure that a demand response-driven upward adjustment to the setpoint for chilled water temperature (or another component that directly or indirectly affects temperature) does not result in an increase in fan energy (or other energy used to cool a space) that would result in greater total building energy use than was saved at the chiller.

Integrated control layer 418 may be configured to provide feedback to demand response layer 414 so that demand response layer 414 checks that constraints (e.g., temperature, lighting levels, etc.) are properly maintained even while demanded load shedding is in progress. The constraints may also include setpoint or sensed boundaries relating to safety, equipment operating limits and performance, comfort, fire codes, electrical codes, energy codes, and the like. Integrated control layer 418 is also logically below fault detection and diagnostics layer 416 and AM&V layer 412. Integrated control layer 418 may be configured to provide calculated inputs (e.g., aggregations) to these higher levels based on outputs from more than one building subsystem.

AM&V layer 412 may be configured to verify that control strategies commanded by integrated control layer 418 or demand response layer 414 are working properly (e.g., using data aggregated by AM&V layer 412, integrated control layer 418, building subsystem integration layer 420, FDD layer 416, or otherwise). The calculations made by AM&V layer 412 may be based on building system energy models and/or equipment models for individual BMS devices or subsystems. For example, AM&V layer 412 may compare a model-predicted output with an actual output from building subsystems 428 to determine an accuracy of the model.

FDD layer 416 may be configured to provide on-going fault detection for building subsystems 428, building subsystem devices (i.e., building equipment), and control algorithms used by demand response layer 414 and integrated control layer 418. FDD layer 416 may receive data inputs from integrated control layer 418, directly from one or more building subsystems or devices, or from another data source. FDD layer 416 may automatically diagnose and respond to detected faults. The responses to detected or diagnosed faults may include providing an alert message to a user, a maintenance scheduling system, or a control algorithm configured to attempt to repair the fault or to work-around the fault.

FDD layer 416 may be configured to output a specific identification of the faulty component or cause of the fault (e.g., loose damper linkage) using detailed subsystem inputs available at building subsystem integration layer 420. In other exemplary embodiments, FDD layer 416 is configured to provide "fault" events to integrated control layer 418 which executes control strategies and policies in response to the received fault events. According to an exemplary embodiment, FDD layer 416 (or a policy executed by an integrated control engine or business rules engine) may shut-down systems or direct control activities around faulty devices or systems to reduce energy waste, extend equipment life, or assure proper control response.

FDD layer 416 may be configured to store or access a variety of different system data stores (or data points for live data). FDD layer 416 may use some content of the data stores to identify faults at the equipment level (e.g., specific chiller, specific AHU, specific terminal unit, etc.) and other content to identify faults at component or subsystem levels. For example, building subsystems 428 may generate temporal (i.e., time-series) data indicating the performance of BMS 400 and the various components thereof. The data generated by building subsystems 428 may include measured or calculated values that exhibit statistical characteristics and provide information about how the corresponding system or process (e.g., a temperature control process, a flow control process, etc.) is performing in terms of error from its setpoint. These processes may be examined by FDD layer 416 to expose when the system begins to degrade in performance and alert a user to repair the fault before it becomes more severe.

### HVAC Actuator

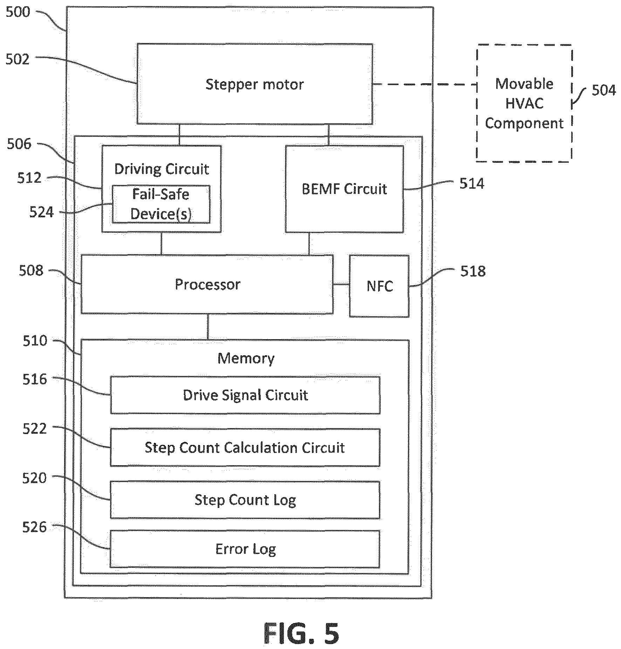

Referring now to FIG. 5, a schematic diagram of an actuator 500 for use in an HVAC system is shown, according to an exemplary embodiment. In some implementations, actuator 500 may be used in HVAC system 100, waterside system 200, airside system 300, or BMS 400, as described with reference to FIGS. 1-4. For example, actuator 500 may be a damper actuator, a valve actuator, a fan actuator, a pump actuator, or any other type of actuator that may be used in an HVAC system or BMS. In various embodiments, actuator 500 may be a linear actuator (e.g., a linear proportional actuator), a non-linear actuator, a spring return actuator, or a non-spring return actuator.

The actuator 500 includes a stepper motor 502. Stepper motor 502 is configured to provide a force to one or more movable HVAC components 504. For instance, stepper motor 502 may drive a damper, a valve, a fan, a pump, etc. Stepper motor 502 may rotate in predetermined steps. For instance, a full rotation of a rotor for the stepper motor 502 may be divided into a number of steps. From an initial position, stepper motor 502 may rotate in the predetermined steps towards a full rotation. Where the stepper motor 502 rotates the full number of steps, the stepper motor 502 will have completed a full rotation. Such embodiments permit precise movement and control of stepper motor 502 and, therefore, the output(s) or components 504 which stepper motor 502 is driving.

Actuator 500 is shown to include an actuator controller 506. Actuator controller 506 may be located on-board actuator 500 (i.e., actuator controller 506 is contained within a housing for actuator 500). In other implementations, one or more of the components of actuator controller 506 may be located external from actuator 500. For instance, actuator controller 506 may be a component of BMS controller 366.

In these and other implementations, actuator controller 506 may be implemented as a processing circuit having a processor 508 and memory 510. In some embodiments, the processing circuit may be processing circuit 404. In these embodiments, processor 508 and memory 510 may be the same as (or a part of) processor 406 and memory 408, respectively. In other embodiments, processing circuit may be separate from processing circuit 404. Accordingly, processor 508 and memory 510 may be different from processor 406 and memory 408, respectively. In still other embodiments, portions of the processing circuit may be located remote from actuator 500 (for instance, processor 508 may be a part of processor 406, or memory 510 may be a part of memory 408, etc.).

The processor 508 may be implemented as a general purpose processor, an ASIC, one or more FPGAs, a group of processing components, or other suitable electronic processing components. Additionally, memory 510 (e.g., memory, memory unit, storage device, etc.) may include one or more devices (e.g., RAM, ROM, Flash memory, hard disk storage, etc.) for storing data and/or computer code for completing or facilitating the various processes, layers, and modules described in the present application. Memory 510 may be or include volatile memory or non-volatile memory. Memory 510 may include database components, object code components, script components, or any other type of information structure for supporting the various activities and information structures described in the present application. According to an exemplary embodiment, memory 510 is communicably connected to processor 508 via processing circuit and includes computer code for executing (e.g., by processing circuit and/or processor) one or more processes described herein.

The actuator 500 is shown to include a driving circuit 512. The driving circuit 512 may be or include a number of components configured to drive stepper motor 502. The drive circuit 512 may be operatively connected to processor 508 and stepper motor 502. In some embodiments, driving circuit 512 may receive one or more signals (e.g., from processor 508, as discussed in greater detail below), and provide those signals to the stepper motor 502 to cause the stepper motor 502 to rotate. In some embodiments, the signal provided to the stepper motor 502 may be a pulsed signal. Each pulse in a given signal causes stepper motor 502 to rotate a step.

The actuator 500 is shown to include a BEMF circuit 514. The BEMF may be or include a number of components configured to determine a BEMF from the stepper motor 502. The BEMF determined via the BEMF circuit 514 may be used for accurately determining a step count for stepper motor 502, as discussed in greater detail below. The BEMF of the stepper motor 502 may be a result of a rotor for the stepper motor 502 rotating. In some embodiments, the BEMF may increase as the load on the rotor for the stepper motor 502 increases.

Memory 510 is shown to include various circuits. Each of these circuits may be embodied on memory 510 and structured to cause the processor 508 to execute various functions described herein. While shown as separate from one another, one or more of these circuits may be combined with another circuit. Further, some circuits may be divided into one or more additional circuits.

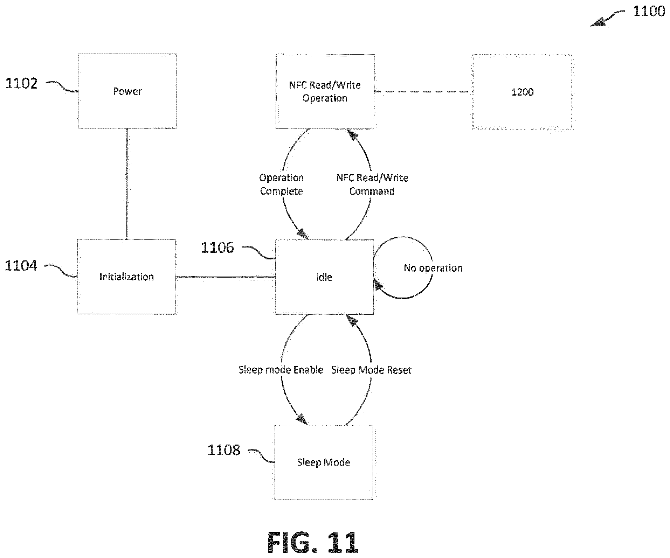

Memory 510 is shown to include a drive signal circuit 516. The drive signal circuit 516 may be or include various circuitry that causes the processor 508 to generate signals for driving stepper motor 502. The processor 508 may receive inputs from, for instance, one or more external sources. For instance, actuator 500 may include a communications device. In some embodiments, the communications device may be a near-field communications (NFC) device 518. The NFC device 518 may be communicably coupled to and provide commands to the processor 508. The NFC device 518 will be described in further detail below with respect to FIG. 11. In other embodiments, the processor 508 may receive inputs from other external sources, such as other processors/communications devices located within the HVAC system/BMS system.

The inputs received by the processor 508 may cause the processor 508 to drive the stepper motor 502. For instance, one of the inputs may be an input directing the processor 508 to move a valve being controlled by the stepper motor 502 from a closed position to an open position. Such position may be defined by a full rotation of the stepper motor 502. The drive signal circuit 516 may generate one or more signals that cause the stepper motor 502 to rotate a number of full steps for a full rotation.

In some embodiments, the processor 508 may maintain a step count log 520 for the stepper motor 502. The step count log 520 maintained by the processor 508 may be stored on memory 510. As the processor 508 generates drive signals via the drive signal circuit 516 which are communicated to the driving circuit 512, the processor 508 may update the step count log 520. For instance, where the processor 508 generates a drive signal to rotate stepper motor 502 by one step, the processor 508 may correspondingly modify the step count log 520 by one step. Accordingly, the step count log 520 may reflect the current position of the armature for the stepper motor 502.

In some instances, the step count log 520 may not accurately reflect the current position of the armature of the stepper motor 502. For instance, where BEMF causes the rotor for the stepper motor 502 to rotate less steps than intended (e.g., by the processor 508), the step count log 520 may be incorrect by a number of steps. Such instances may occur where the electromotive force caused by inputs from the driving circuit 512 is counteracted by the BEMF, resulting in a decreased electromotive force and, therefore, less rotations of the rotor for the stepper motor 502 than the desired output via the driving circuit 512.

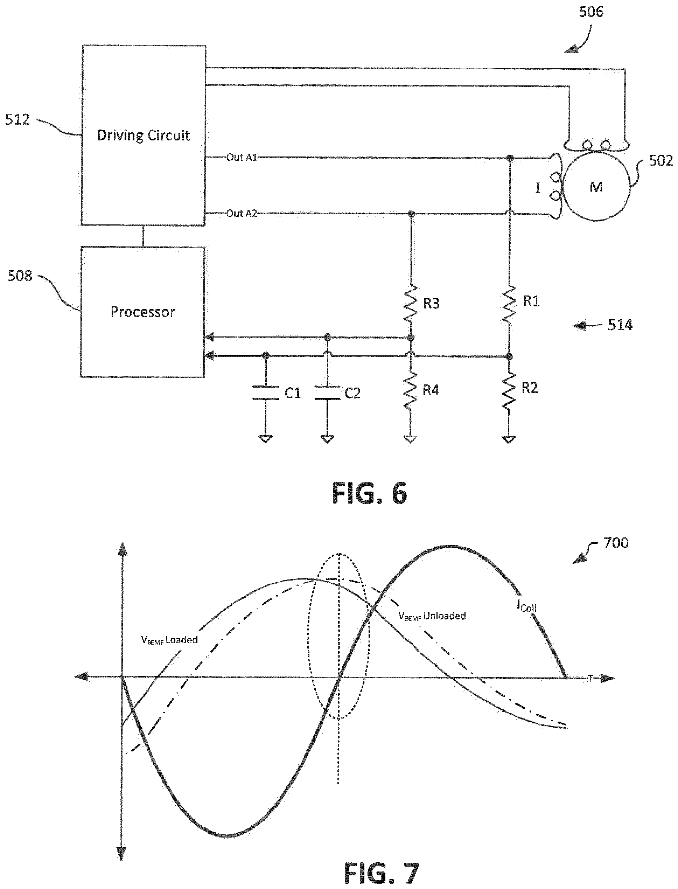

Referring now to FIG. 5 and FIG. 6, the step count log 520 may be modified to accurately reflect the position of the armature of the stepper motor 502. Specifically depicted in FIG. 6 is an example schematic diagram of the actuator controller 506, according to an exemplary embodiment. In the embodiment shown in FIG. 6, the BEMF circuit 514 provides feedback to processor 514. As shown, the BEMF circuit 514 is electrically coupled to the output from the driving circuit 512 (e.g., Out A1 and Out A2). The output from the driving circuit 512 is controlled via the processor 508 and causes the stepper motor 502 to rotate. The output from the driving circuit 512 may be a voltage across (e.g., a difference in voltage between Out A1 and Out A2) an inductor I for the stepper motor 502, as shown. The difference in voltage potential across the inductor I causes current to flow through the inductor I, thereby inducing a magnetic field in the inductor I. The magnetic field causes the stepper motor 502 to rotate. As the rotor for the stepper motor 502 rotates, BEMF is produced, which causes the difference to drop, and thereby reduces current and magnetic field strength. The BEMF may be correlated to the load on the rotor, such that an increased load increases the BEMF.

The BEMF circuit 514 measures the difference in voltage across the inductor I. Specifically, resistors R1 and R2 are arranged in series from one lead (e.g., Out A1) of the inductor I. The voltage drop across R1 is then provided to the processor 508 as feedback. Similarly, resistors R3 and R4 are arranged in series from the other lead (e.g., Out A2) of the inductor I. The voltage drop across R3 is then provided to the processor 508 as feedback. In some embodiments, these voltage drops may be optionally filtered (e.g., by capacitors C1 and C2) prior to providing the voltages to the processor 508. While this arrangement and circuit diagram is provided, the present disclosure is not limited to this specific BEMF circuit 514. To the contrary, the BEMF circuit 514 may be modified and/or supplemented according to various other aspects or design needs.

Referring now to FIG. 6 and FIG. 7, as the voltage across the inductor I changes, the BEMF circuit 514 measures, and provides as feedback, these changes in voltages. Accordingly, the processor 508 receives real-time (or near real-time) measurements of BEMF from the stepper motor 502. Specifically depicted in FIG. 7 is an example graph 700 depicting measurements from the BEMF circuit 514, according to an exemplary embodiment. In the graph shown in FIG. 7, three curves are shown. Specifically, the bolded line shows the current in the inductor (Icoil). The solid line shows voltage across the inductor I (VBEMF Loaded). The dash-dot line shows voltage potential provided by the difference between outputs from the driving circuit 512 (VBEMF Unloaded). Circled (e.g., via dotted line), is the difference between VBEMF Loaded and VBEMF Unloaded when the current across the inductor I is zero. As can be seen, the VBEMF Unloaded is greater than the VBEMF Loaded. The difference between these voltages is a result of the BEMF from the stepper motor 502. This difference is identified by the processor 508. Given the differences in voltages, the processor 508 can identify the real step count, as described in greater detail below.

Referring back to FIG. 5, memory 510 is shown to include a step count calculation circuit 522. The step count calculation circuit 522 may be or include various circuitry that causes the processor 508 to calculate a step count based on BEMF as identified via the BEMF circuit 514.

The processor 508 may identify (e.g., via step count calculation circuit 522) the BEMF for the stepper motor 502. In some embodiments, the processor 508 may compare outputs to be generated via driving circuit 512 to the feedback provided by the BEMF circuit 514. Based on this comparison, the processor 508 may identify the BEMF for the stepper motor 502.

The processor 508 may determine (e.g., via step count calculation circuit 522) a net electromotive force for the stepper motor 502. For instance, the processor 508 may identify the electromotive force to be generated via the driving circuit 512 to the BEMF. The processor 508 may subtract the BEMF from the electromotive force to be generated via the driving circuit 512 to determine the net electromotive force. The net electromotive force may be used by the processor 508 to determine a distance that the stepper motor 502 rotates.

As an example, the driving circuit 512 may produce output signals that are intended to generate an electromotive force that causes the stepper motor 502 to rotate four steps. However, the BEMF from the stepper motor 502 may reduce the electromotive force enough that causes the stepper motor 502 to only rotate three steps. Such a reduction in electromotive force may be determined by the processor 508 and used to accurately determine the position of the armature of the stepper motor 502.

The processor 508 may update (e.g., via step count calculation circuit 522) the step count log 520 to accurately reflect the position of the armature of the stepper motor 502. The processor 508 may compare a calculated step count to data from the step count log 520. Where the processor 508 identifies a difference, based on the calculated step count, the processor 508 may update the step count log 520 to accurately reflect the step count for the stepper motor 502.

Continuing the previous example, where the driving circuit produces output signals that are intended to generate an electromotive force that causes the stepper motor 502 to rotate four steps, the step count log may have already been modified by the corresponding four steps. However, where the BEMF from the stepper motor 502 reduces the electromotive force such that the stepper motor 502 rotates three steps, the step count as reflected in the step count log 520 is not accurate (e.g., the step count log 520 is off by one step). The processor 508 may modify the step count log 520 by one step such that the step count reflected in the step count log 520 accurately reflects the current position of the armature of the stepper motor 502.

In some embodiments, the processor 508 may generate (e.g., via the drive signal circuit 516) one or more corrective drive signals for the driving circuit 512 that causes the stepper motor 502 to rotate the desired number of steps. For instance, where the armature of the stepper motor 502 rotates less than desired (e.g., due to the BEMF), the processor 508 may generate a corrective drive signal to rotate the armature to the desired position. Continuing the previous example, where the armature rotates three steps instead of the four steps, the processor 508 may generate a corrective drive signal that causes the armature to rotate the additional step. The processor 508 may then correspondingly update the step count log 520.

### Step Count Process

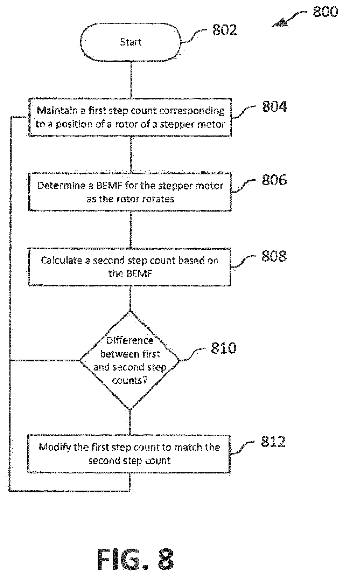

Referring now to FIG. 8, a flowchart of a process 800 for reflecting a step count for a stepper motor in an actuator 500 is shown, according to an exemplary embodiment. Process 800 may be performed by actuator controller 506. As shown in FIG. 5, stepper motor 502 may be implemented within actuator 500. A microcontroller such as actuator controller 606 may particularly be configured to cause the steps of process 800 to be executed. However, it should be appreciated that solid state electronic circuitry may be provided to perform the steps of process 800 in place of a microcontroller.

Process 800 is shown to include a starting block (step 802). Process 800 may start when the actuator 500 is installed (e.g., in the HVAC or BMS systems). The process 800 may start when the actuator 500 is controlled.

Process 800 is shown to include maintaining a first step count corresponding to a position of a rotor for the stepper motor 502 (step 804). The first step count may be the step count maintained in the step count log 520 on memory 510. As the processor 508 generates drive signals (e.g., via the drive signal circuit 516), the processor 508 may update the step count log 520. For instance, where the processor 508 generates a drive signal to rotate the rotor by four steps, the processor 508 may modify the step count log 520 by four steps.

Process 800 is shown to include determining a BEMF for the stepper motor 502 as the rotor rotates (step 806). The processor 508 may compare (e.g., via the step count calculation circuit 522) outputs to be provided by the driving circuit 512 to feedback received from the BEMF circuit 514. Based on this comparison, the processor 508 may identify a difference in voltage resulting from the BEMF of the stepper motor 502. Based on the difference in voltage, the processor 508 may identify the BEMF.

Process 800 is shown to include calculating a second step count based on the BEMF (step 808). The processor 508 may identify (e.g., via the step count calculation circuit 522) a net electromotive force for the stepper motor 502. For instance, the processor 508 may subtract the BEMF from the electromotive force to be provided by the driving circuit 512. The processor 508 may determine, based on the net electromotive force, a number of steps that the rotor rotated due to the resulting reduced electromotive force.

Process 800 is shown to include comparing the first and second step counts (step 810). In some embodiments, the processor 508 may compare (e.g., via step count calculation circuit 522) the first step count (e.g., maintained at step 802) to the second step count (e.g., calculated at step 808). The processor 508 may determine whether there is a difference in step count based on the comparison. The difference in step count may be a result of the BEMF reducing the electromotive force such that the rotor rotates less than intended. Where the processor 508 identifies a difference in the step count, the process 800 may proceed to step 812. Where the processor 508 does not identify a difference, the process 800 may proceed back to step 802.

Process 800 is shown to include modifying the first step count to match the second step count (step 812). The processor 508 may update (e.g., via the step count calculation circuit 522) the step count log 520 to accurately reflect the step count based on the comparison (e.g., at step 810). Accordingly, the step count log 520 may more accurately reflect the position of the rotor for the stepper motor 502 for the actuator 500 by taking into consideration BEMF.

In some embodiments, following step 812, the processor 508 may generate (e.g., via drive signal circuit 516) one or more corrective drive signals for the driving circuit 512. The processor 508 may generate such corrective drive signals when the rotor rotates less than intended (as indicated by a difference in step count). Accordingly, the processor 508 may update the step count log 520 to accurately reflect the current position of the rotor, and then generate corrective driving signals for the driving circuit 412 to rotate the rotor into the desired position.

### Actuator Fail-Safe

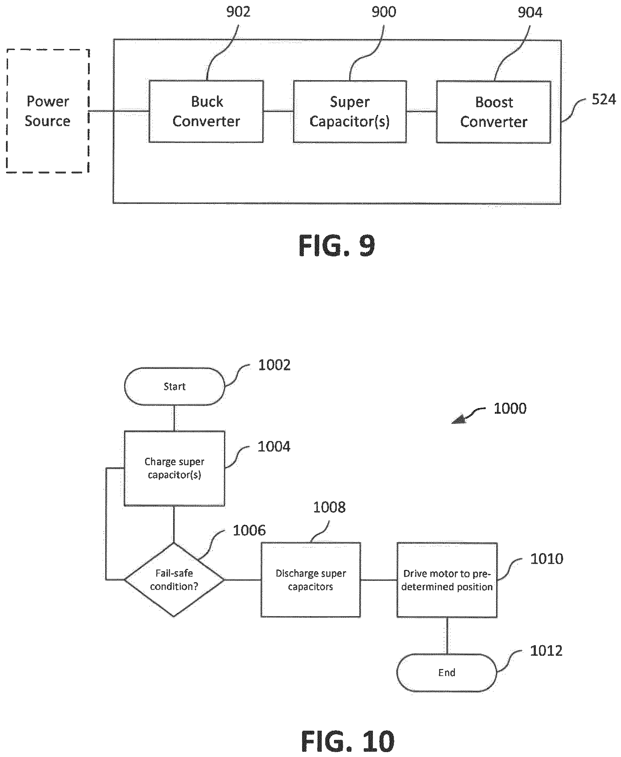

Referring now to FIG. 5 and FIG. 9, the driving circuit 512 is shown to include one or more fail-safe devices 524. Specifically depicted in FIG. 9 is a fail-safe device 524 for the actuator 500, according to an exemplary embodiment. In some embodiments, the fail-safe device(s) 524 may include one or more super capacitors 900. The super capacitors 900 may be serially arranged, arranged in parallel, etc., such that the super capacitors 900 can discharge sufficient power to move stepper motor 502 to a predetermined position in the event of a fail-safe condition. The fail-safe condition may be, for instance, power failure.

As shown in FIG. 9, power from a power source (e.g., a power source remote from the actuator 500, from the driving circuit 512, etc.) is provided to the fail-safe device 524. In some embodiments, the power may be provided directly to a buck (e.g., step-down) converter 902. In embodiments such as these, the power may be DC power. In other embodiments, various rectifying circuitry may be provided between the power source and the buck converter 902. In embodiments such as these, the power may be AC power. In some embodiments, various protective circuity may be arranged to protect the fail-safe device 524. In each of these embodiments, DC power may be provided to the buck converter 902. The buck converter 902 can step down the voltage while increasing the current supplied to the super capacitor(s) 900.

The buck converter 902 can therefore charge the super capacitor(s) 900. In some instances, the super capacitor(s) 900 may be charged to 2.7 V. In other instances, the super capacitor(s) 900 may be charged to different voltages, depending on design needs.

The super capacitor(s) 900 may then be electrically coupled to a boost converter 904. The boost converter 904 can step up the voltage from the super capacitor(s) 900 to the voltage needed to drive a motor (e.g., stepper motor 502). The boost converter 904 may step up the voltage as the super capacitor(s) 900 are discharged (e.g., when a fail-safe condition is detected). The output from the boost converter 904 may be provided to, for instance, a switch controlled by the actuator controller 506 (e.g., by processor 508). In some instances, a low-dropout regulator may be arranged to regulate the voltage from the boost converter 904. In this regard, the low-dropout regulator can maintain the output voltage from the boost converter 904 to ensure sufficient power is provided to the motor (e.g., stepper motor 502).

In embodiments such as these, the fail-safe device 524, through discharge of the super capacitors 900, may safely control the motor (e.g., stepper motor 502) to move the movable HVAC component 504 to a pre-determined position (e.g., fully open, fully closed, mid-position, etc.) in the event of a fail-safe condition (intermittent interruptions, total power loss, etc.). Such embodiments are advantageous over common spring-controls, as spring-controlled models may damage various actuator 500 components in the event of a fail-safe condition. Such embodiments are further lower in cost relative to spring-control models. Additionally, the embodiments described herein are configured to provide for switch-selectable fail-safe direction. For instance, the fail-safe device 520 can be controlled to change the direction of movement (e.g., clockwise or counterclockwise). Changing direction of traditional spring-control models may not be as simple. Lastly, the embodiments described herein may provide a longer lifespan of the actuator 500.

While this fail-safe device 524 is disclosed, other fail-safe device(s) 524 may be included. Accordingly, the present disclosure is not limited to this particular arrangement.

Referring now to FIG. 10, a flowchart of a process 1000 for controlling the actuator 500 in the event of a fail-safe condition is shown, according to an exemplary embodiment. Process 1000 may be performed by actuator controller 506. A microcontroller, such as actuator controller 506 may particularly be configured to cause the steps of process 1000 to be executed. However, it should be appreciated that solid-state electronic circuitry may be provided to perform the steps of process 1000 in place of a microcontroller.

Process 1000 is shown to include a starting block (step 1002). Process 1000 may start when the actuator 500 is installed (e.g., in the HVAC or BMS systems). The process 1000 may start when the actuator 500 is controlled.

Process 1000 is shown to include charging super capacitor(s) 900 (step 1004). In some embodiments, power from a power source may be rectified and provided to buck converter 902. Buck converter 902 may step down the voltage to a voltage suitable for charging super capacitor(s) 900. Protective and/or rectifying circuitry may be provided between the power source and the buck converter 902. Super capacitor(s) 900 may receive power from the buck converter 902 for charging. In some embodiments, the super capacitor(s) 900 may be charged to 2.7 V. In other embodiments, the super capacitor(s) 900 may be charged to a different voltage. When charged, the super capacitor(s) 900 may be electrically coupled to a boost converter 904. The boost converter 904 is arranged to step up the voltage from the super capacitor(s) 900 when a fail-safe condition is detected.

Process 1000 is shown to include determining whether a fail-safe condition is detected (step 1006). Various monitoring circuitry or sensors may be arranged to detect a fail-safe condition. Processor 508 may receive input from these monitoring circuitry/sensors to detect the fail-safe condition. Where a fail-safe condition has not been detected, the process 1000 may proceed back to step 1004 (e.g., charging the super capacitor(s) 900). Where processor 508 detects a fail-safe condition, the process 1000 may proceed to step 1008.

Process 1000 is shown to include discharging the super capacitor(s) 900 (step 1008). The actuator controller 506 may control the fail-safe device 524 to cause the fail-safe device 524 to discharge the super capacitor(s) 900. In some embodiments, the super capacitor(s) 900 may be discharged to 0.7 V.

As the super capacitor(s) 900 are discharged, process 1000 is shown to include driving the motor (e.g., stepper motor 502) to a pre-determined position (step 1010). The pre-determined position may be a position where the movable HVAC component 504 is fully open, fully closed, an intermediate or mid-way position, etc.

Process 1000 is shown to include an ending block (e.g., step 1012). The process 1000 may end when the movable HVAC component 504 is moved to the pre-determined position.

### Actuator Control

Referring back to FIG. 5, in some embodiments, the actuator 500 may include an NFC device 518. The NFC device 518 may enable remote control of the actuator 500 without manual configuration via switches, such as dip-switches, traditionally used in the art. A person, such as an operator, may have a corresponding control device including a NFC device. The actuator's 500 NFC device 518 may be communicably coupled with the operator's NFC device (e.g., a smartphone, tablet, mobile device, etc.) and receive commands from the operator via the respective operator NFC devices. For instance, the operator may generate commands to control the position of a rotor of the stepper motor 502. Such commands may be generated to operate the actuator 500, to test the actuator 500, etc., as discussed in greater detail below.

In arrangements such as these, the operator may access data from the actuator 500 and modify settings for (or otherwise controlling) the actuator 500 without having to remove any covers for the actuator 500 and manually change settings. Additionally, in arrangements such as these, the operator may access error logs 526 and/or other logs (such as the step count log 520) maintained by the actuator 500 via respective NFC devices. The operator may then control the actuator 500 via the respective NFC devices based on these logs. Such arrangements may reduce the cost of production by replacing traditional dip-switches with NFC devices 518, which can communicate with an interface of the operator (such as on the operator's smart device).

Structured commands may be communicated from the operator's device to the actuator 500 via the respective NFC devices. The structured commands may be encrypted with a specific packet structure such that the command only controls a targeted actuator 500. The structured commands may modify various settings for the actuator 500, such as range, feedback, action, control characteristics, etc. The structured command may control the position of the movable HVAC component 504. The structured command may implement one or more of the tests described below. The structured command may instruct communication of various logs to the operator via the NFC device 518. Each of these commands for the actuator 500 may control the actuator 500 by the operator sending corresponding structured commands from the operator's device including an NFC device to the actuator's 500 NFC device 518.

Referring now to FIG. 5 and FIG. 11, in some embodiments, the NFC device 518 may be powered up and initialized. Specifically, FIG. 11 depicts a state diagram 1100 for the NFC device 518, according to an exemplary embodiment. As shown, the NFC device 518 may be powered up (state 1102). The NFC device 518 may be powered up when the actuator 500 is installed. The NFC device 518 may be initialized (state 1104). The NFC device 518 may receive an initialization signal from, for instance, the operator NFC device. Once initialized, the NFC device 518 may be maintained in an idle state (state 1106). In the idle state, the NFC device 518 may await subsequent commands from the operator (e.g., via the operator NFC device). After a duration of not receiving commands, the NFC device 518 may enter a sleep mode (state 1108). In the sleep mode, the NFC device 518 may enter a low power mode where the NFC device 518 does not draw as much current. The NFC device 518 may then receive a command (e.g., either in the sleep mode or in the idle mode). In some embodiments,the NFC device 518 may receive a sleep mode reset command to transition the NFC device 518 from the sleep mode to the idle mode, then receive an additional command. The additional command may be an NFC Read/Write command. The NFC device 518 may enter an NFC Read/Write operation state (state 1110). In this state, the NFC device 518 may proceed according to flow chart 1200, as described below.

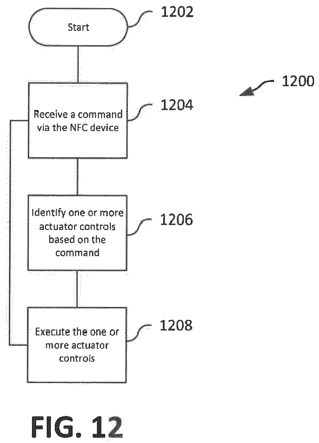

Referring now to FIG. 5 and FIG. 12, the actuator 500 may be controlled via the NFC device 518. Specifically depicted in FIG. 12 is a flowchart of a process 1200 for controlling the actuator 500 via NFC device 518, according to an exemplary embodiment. Process 1200 may be performed by actuator controller 506. A microcontroller, such as actuator controller 506, may particularly be configured to cause the steps of process 1200 to be executed. However, it should be appreciated that solid state electronic circuitry may be provided to perform the steps of process 1200 in place of a microcontroller.

Process 1200 is shown to include starting block (step 1202). Process 1200 may start when the actuator 500 is installed (e.g., in the HVAC or BMS systems). The process 1200 may start when the actuator 500 is controlled.

The process 1200 is shown to include receiving a command via the NFC device 518 (step 1204). The command may be a structured command that is targeted for the actuator 500. The structured command may have a specific structure that is directed specifically to the actuator 500. In this regard, the structured command may only control one specific actuator 500. The command may modify various operating characteristics and/or configurations for the actuator 500. Such operating characteristics and/or configurations may include, for instance, range, feedback, action, control characteristics, movable HVAC component 504 position, testing, transmission of log data, etc. Each of these operating characteristics and/or configurations may have a corresponding actuator control, which are communicated to the actuator 500 via a corresponding command.

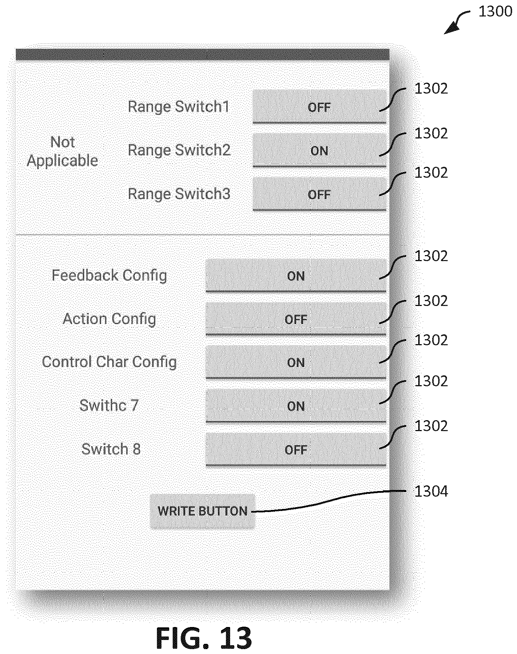

Such commands may be received on the operator NFC device on a user interface 1300 such as that depicted in FIG. 13. Specifically, FIG. 13 depicts an example interface 1300 for controlling the actuator 500 via the NFC device 518 according to an exemplary embodiment. The operator may select various buttons 1302 to generate various commands for the actuator 500. The operator may then select a write button 1304 to send the command to the actuator 500.

The process 1200 is shown to include identifying one or more actuator controls based on the command (step 1206). The NFC device 518 may communicate the command to other components within the actuator controller 506 (for instance, the processor 508). The processor 508 may identify the one or more actuator controls based on the command received from the NFC device 518. For instance, the processor 508 may access a look-up table (e.g., stored on memory 510) to identify which actuator controls correspond to the received commands.

The process 1200 is shown to include executing the one or more actuator controls (step 1108). The processor 508 may generate one or more commands for various components of the actuator to execute the commands. In this regard, the processor 508 receives inputs from an operator via NFC device 518, and controls various characteristics/configurations for the actuator 500 based on these inputs. Such embodiments may reduce cost and increase ease of use of the actuator 500.

### Actuator Testing

In some embodiments, the actuator 500 may be tested at various intervals. Such testing may include, for instance, an initial calibration test and partial stroke test. The initial calibration test may be used for determining a current necessary for providing a desired torque output from the motor (e.g., stepper motor 502). The initial calibration test may be performed prior to installation. As discussed in further detail below, the initial calibration test may be wholly automated, thus reducing human error and expediting the testing process. The partial stroke test may test the performance of the motor (e.g., stepper motor 502) and/or the movable HVAC component 504. For instance, the partial stroke test may move the motor to an intermediate position that causes the movable HVAC component 504 to partially move. Such a test may be performed, for instance, at intervals following installation. The partial stroke test may ensure operation of the movable HVAC component 504, and may remove any debris/sediment build-up between the movable HVAC component 504 and the body within which the HVAC component 504 moves (a conduit, for instance).

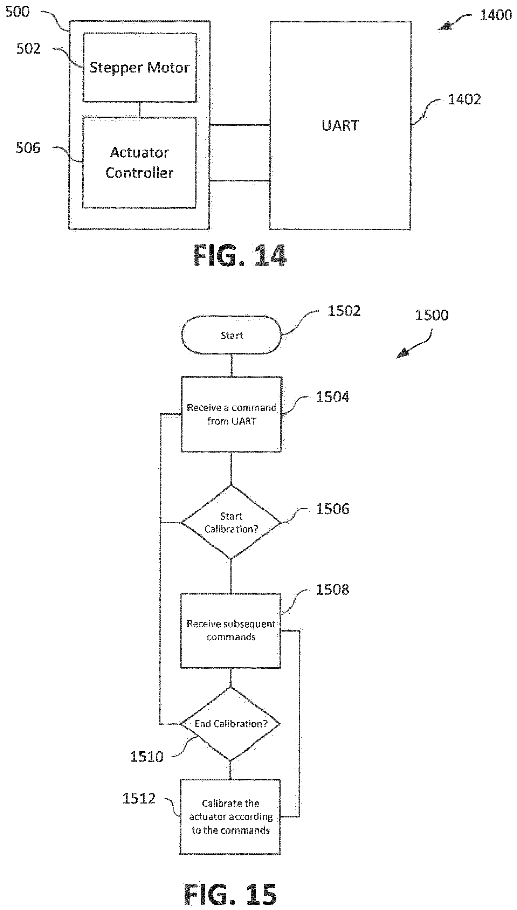

Referring now to FIG. 14, an example initial calibration test system 1400 for the actuator 500 is shown, according to an exemplary embodiment. As shown, the initial calibration test system 1400 includes the actuator 500 and a universal asynchronous receiver-transmitter (UART) 1402. The UART 1402 may be configured to generate commands for the actuator 500. Specifically, the UART 1402 may be configured to generate commands that instruct the actuator 500 to enter a calibration mode. When in the calibration mode, the UART 1402 may exercise control over the motor (e.g., stepper motor 502) for the actuator 500. The UART 1402 may generate various commands to move the motor in various directions, at various speeds, change LED states, change force, etc. Each of these commands may be communicated from the UART 1402 (via the actuator controller 506) to the motor. The UART 1402 may receive feedback from the actuator 500. Accordingly, the UART 1402 can calibrate the actuator 500 with little to no operator intervention.

Referring now to FIG. 15, a flowchart of a process 1500 for calibrating the actuator 500 via the UART 1402 is shown, according to an exemplary embodiment. Process 1500 may be performed by actuator controller 506. A microcontroller, such as actuator controller 506, may particularly be configured to cause the steps of process 1500 to be executed. However, it should be appreciated that solid-state electronic circuitry may be provided to perform the steps of process 1500 in place of a microcontroller.

Process 1500 is shown to include starting block (step 1502). Process 1500 may start when the actuator 500 is installed (e.g., in the HVAC or BMS systems). The process 1500 may start when the actuator 500 is controlled.

Process 1500 is shown to include receiving a command from the UART 1402 (step 1504). The command may be generated, for instance, by an operator of the UART 1402 when the actuator 500 is connected to the UART 1402. In some instances, the command may be a start calibration command. In other instances, the command may be a different command.

Process 1500 is shown to include determining whether the command received at step 1304 was a start calibration command (step 1506). In instances where the start calibration mode is not received, the process 1500 may operate loop back to step 1504. While in the loop, the actuator 500 may operate in a standard application mode. The actuator 500 may monitor (e.g., in real-time, in intervals, etc.) whether any command has been received. Where a start calibration command has been received, the process 1500 may proceed to step 1508.

Process 1500 is shown to include receiving subsequent commands from the UART 1402 (step 1508). In instances where the start calibration command is received, the actuator 500 may be switched to a calibration mode. In the calibration mode, the actuator 500 may be controlled via the UART. In this regard, the UART acts as a master and the actuator 500 acts as a slave. The subsequent commands may driving the motor (e.g., stepper motor 502) up, down, or stopping the motor, changing the motor speed, changing LED states, changing a force output, ending calibration, etc. Each command may include an indication of the calibration test (e.g., direction, speed, LED, force, end, etc.) in one byte, and a corresponding value for the test. For instance, the first byte may indicate a change in the motor speed, and the second byte may indicate a degree of change.

Process 1500 is shown to include determining whether the command received at step 1508 was an end calibration command (step 1510). Where the command was an end calibration command, the process 1500 may proceed back to step 1504. Specifically, the actuator 500 may operate back in the standard application mode. However, where the command is not an end calibration command, the process 1500 may proceed to step 1512.

Process 1500 is shown to include calibrating the actuator 500 according to the received commands at 1508. The actuator 500 may be controlled by the UART 1402, and as various commands are communicated to the actuator 500, parameters for the actuator 500 may be modified. In this regard, the actuator 500 calibration can be fully automated, where a series of commands are communicated to the actuator 500. Each command can calibrate the actuator 500 with little to no operator intervention, thereby achieving greater performance and higher repeatability.

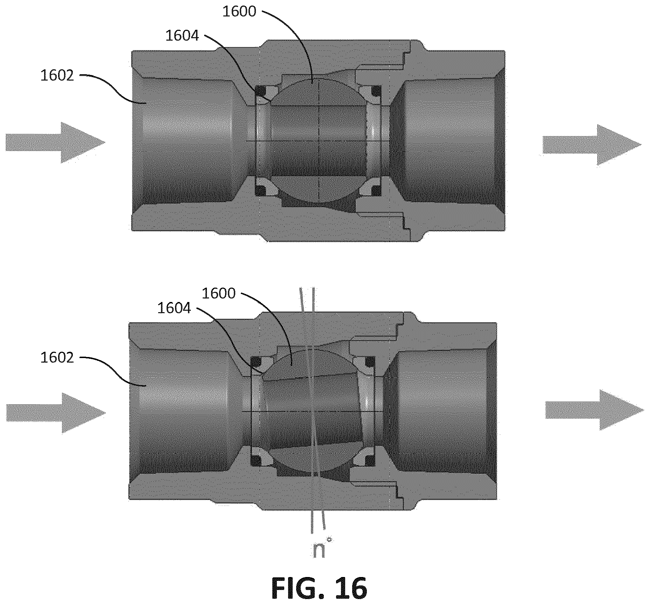

Referring now to FIG. 16, in some instances, the test may be a partial stroke testing. Specifically, FIG. 16 depicts a partial stroke test of a movable HVAC component 504 operated by the actuator 500, according to an exemplary embodiment. In the embodiment shown in FIG. 16, the movable HVAC component 504 is a valve 1600. The valve 1600 may be a ball valve which may be rotated (e.g., by the actuator 500) between open and closed positions. The valve 1600 may have a range of motion. The range of motion may be defined as the movement of the valve 1600 between the fully open position and the fully closed position. For instance, the valve 1600 may have a stopping position at the fully open position and a stopping position at the fully closed position. The stopping position may be a position where the valve 1600 can no longer be rotated in the same direction. From the stopping position of (for instance) the fully open position, the actuator 500 may rotate the valve 1600 towards the fully closed position until the valve 1600 reaches the stopping position for the fully closed position.

In some embodiments, the range of motion may include a dead space. The dead space may be a portion of the range of motion next to end points (or stopping positions). The dead space may be defined as the space of the valve 1600 where fluid-flow condition of the conduit is not changed. As the valve 1600 rotates away from a respective stopping position, the valve 1600 may rotate within the dead space until, following a number of degrees (also referred to as a dead angle), the fluid-flow condition of the conduit changes. Where the valve 1600 is moving from fully open to fully closed position, the fluid-flow condition may change by decreasing fluid flow within the conduit through the valve 1600. Similarly, where the valve 1600 is moving from fully closed to fully open position, the fluid-flow condition may change by increasing fluid flow within the conduit through the valve 1600. Hence, the dead space may be a limited portion of the range of motion for the valve 1600 in which the fluid-flow condition of the conduit is maintained. As the valve 1600 is rotated beyond the dead space, the fluid-flow condition for the conduit changes depending on the direction of movement of the valve 1600.

It is noted that the valve 1600 shown in FIG. 16 is shown as open. However, the valve 1600 may be normally closed. Accordingly, the present disclosure is not limited to either arrangement. To the contrary, the partial stroke test may operate on either a normally open valve or a normally closed valve. The valve 1600 is positioned within a conduit 1602 such that fluid that flows within the conduit 1602 may pass through the valve 1600. In some embodiments, the fluid may carry particulates that can build up at a juncture 1604 between the valve 1600 and an adjacent portion of the conduit 1602 or valve seat (e.g., the body within which the valve 1600 rotates). Such instances may cause the valve 1600 to stick and therefore not perform optimally.

The partial stroke test (shown in the transition between the top and bottom portions of FIG. 16) may be a test that partially actuates a valve 1600 to ensure operation of the valve and the motor (e.g., stepper motor 502). The valve may be in a pre-test position (e.g., normally open or normally closed). In some embodiments, the actuator controller 506 (e.g., processor 508) may monitor a duration that the valve has been in the pre-test position (e.g., normally open or normally closed). The actuator controller 506 may compare the duration to a threshold - for instance, a number of hours, days, weeks, etc. Where the duration exceeds the threshold, the actuator controller 506 may initiate the partial stroke test. In other embodiments, the partial stroke test may be initiated manually. For instance, the partial stroke test may be initiated by an operator generating a command that is communicated (e.g., wired or wireless via Wi-Fi, NFC as described above, etc.) to the actuator 500. Responsive to receiving the command, the actuator 500 may initiate the partial stroke test.

During the partial stroke test, the actuator 500 is controlled to move the movable HVAC component 504. The HVAC component 504 in these embodiments may be the valve 1600 positioned in a conduit 1602. As stated above, the valve 1600 may be in a pre-test position (e.g., open or closed). Where open, fluid-flow through the conduit is permitted through the valve 1600. Where closed, fluid-flow through the valve 1600 is inhibited via the valve 1600. During the partial stroke test, the fluid-flow condition for the conduit is maintained by minimal operation of the valve. For instance, the valve may be actuated a number of degrees where the valve 1600 is maintained within its dead space (e.g., the amount of movement just before changing the fluid-flow condition for the conduit). In some instances, such as those where the valve 1600 is rotated open and closed, the valve 1600 may be rotated approximately 5°, which may be within a dead angle for the valve. Such embodiments may ensure the smooth operation of the valve 1600 over the valve's lifespan by partially stroking the valve 1600, while still maintaining the same operation of the valve 1600 during the partial stroke test. Additionally, where the valve is in an open pre-test position, such embodiments may remove impurities or particulates that stick within the juncture of the valve and the conduit or seat where the valve rotates.

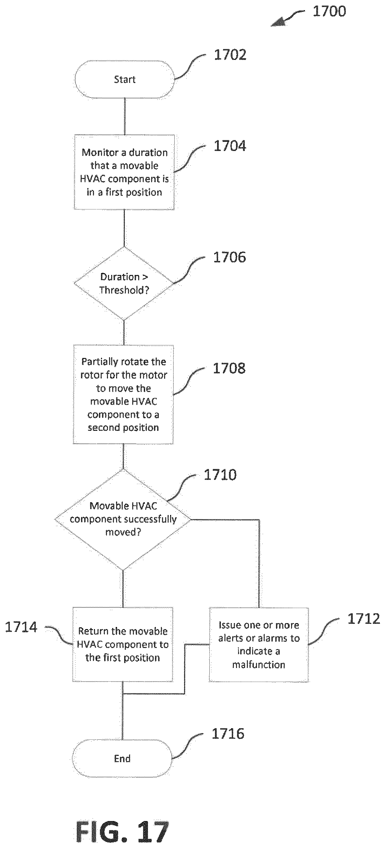

Referring now to FIG. 17, a flowchart of a process 1700 of partially stroking a valve operated by actuator 500 is shown, according to an exemplary embodiment. Process 1700 may be performed by actuator controller 506. A microcontroller, such as actuator controller 506, may particularly be configured to cause the steps of process 1700 to be executed. However, it should be appreciated that solid-state electronic circuitry may be provided to perform the steps of process 1700 in place of a microcontroller.

Process 1700 is shown to include starting block (step 1702). Process 1700 may start when the actuator 500 is installed (e.g., in the HVAC or BMS systems). The process 1700 may start when the actuator 500 is controlled.

Process 1700 is shown to include monitoring a duration that the movable HVAC component 504 (e.g., valve 1600) is in a first position (step 1704). The actuator controller 506 may maintain a log or a timer of the duration that the movable HVAC component 504 is in the first position. The first position may be the fully open position (e.g., where the valve 1600 is located in the stopping position for the fully open position). In this regard, the valve 1600 may be a normally-open position. In implementations where the valve 1600 is in a normally-closed position, the first position may be the fully closed position (e.g., where the valve 1600 is located in the stopping position for the fully closed position).

Process 1700 is shown to include determining whether the duration monitored at step 1704 exceeds a threshold (step 1706). The threshold may be a number of hours, days, weeks, months, etc. The actuator controller 506 may compare the duration maintained at step 1704 to the threshold. Where the duration does not exceed the threshold, the process 1700 may proceed back to step 1706. However, where the duration exceeds the threshold, the process 1700 may proceed to step 1708.

Process 1700 is shown to include partially rotating the rotor for the motor (e.g., stepper motor 502) to move the movable HVAC component 504 (e.g., valve 1600) to a second position (step 1708). The second position may be within a dead space, such that the fluid-flow condition is maintained throughout the partial stroke test. In some embodiments, the rotation may be configured by the operator. For instance, the operator may modify the output torque, the degree of rotation, etc. The operator may provide partial stroke settings (e.g., via dip switches, NFC device 518, some other wired or wireless communications device, etc.) to the actuator 500. The processor 508 may generate commands to the driving circuit 512 that causes the armature for the motor (e.g., the rotor for stepper motor 502) to partially rotate a shaft or other coupling that is connected to the movable HVAC component 504 (e.g., the valve).

Process 1700 is shown to include determining whether the movable HVAC component 504 was successfully moved (step 1710). The actuator controller 506 may monitor (e.g., via sensors and/or other feedback circuitry) the position of the armature for the motor (e.g., the rotor for the stepper motor 502). The actuator controller 506 may determine, based on the monitored position, whether the valve moved (through corresponding motor rotational output). The actuator controller 506 may determine whether the valve 1600 moved from the first position towards the second position. In some embodiments, the actuator controller 506 may determine whether the valve 1600 moved into the second position. Where the actuator controller 506 determines that the valve did not move, the actuator controller 506 may issue one or more alerts/alarms, etc., to indicate a malfunction (step 1712). Where the actuator controller 506 determines that the valve moved, the actuator controller 506 may control the motor (e.g., stepper motor 502) to rotate the movable HVAC component back to the first position (step 1714). From both step 1712 and step 1714, the process 1700 may end (step 1716).

### Configuration of Exemplary Embodiments

As utilized herein, the terms "approximately," "about," "substantially", and similar terms are intended to have a broad meaning in harmony with the common and accepted usage by those of ordinary skill in the art to which the subject matter of this disclosure pertains. It should be understood by those of skill in the art who review this disclosure that these terms are intended to allow a description of certain features described and claimed without restricting the scope of these features to the precise numerical ranges provided. Accordingly, these terms should be interpreted as indicating that insubstantial or inconsequential modifications or alterations of the subject matter described and claimed are considered to be within the scope of the disclosure as recited in the appended claims.

It should be noted that the term "exemplary" and variations thereof, as used herein to describe various embodiments, are intended to indicate that such embodiments are possible examples, representations, or illustrations of possible embodiments (and such terms are not intended to connote that such embodiments are necessarily extraordinary or superlative examples).

The term "coupled" and variations thereof, as used herein, means the joining of two members directly or indirectly to one another. Such joining may be stationary (e.g., permanent or fixed) or moveable (e.g., removable or releasable). Such joining may be achieved with the two members coupled directly to each other, with the two members coupled to each other using a separate intervening member and any additional intermediate members coupled with one another, or with the two members coupled to each other using an intervening member that is integrally formed as a single unitary body with one of the two members. If "coupled" or variations thereof are modified by an additional term (e.g., directly coupled), the generic definition of "coupled" provided above is modified by the plain language meaning of the additional term (e.g., "directly coupled" means the joining of two members without any separate intervening member), resulting in a narrower definition than the generic definition of "coupled" provided above. Such coupling may be mechanical, electrical, or fluidic.

The term "or," as used herein, is used in its inclusive sense (and not in its exclusive sense) so that when used to connect a list of elements, the term "or" means one, some, or all of the elements in the list. Conjunctive language such as the phrase "at least one of X, Y, and Z," unless specifically stated otherwise, is understood to convey that an element may be either X, Y, Z; X and Y; X and Z; Y and Z; or X, Y, and Z (i.e., any combination of X, Y, and Z). Thus, such conjunctive language is not generally intended to imply that certain embodiments require at least one of X, at least one of Y, and at least one of Z to each be present, unless otherwise indicated.

References herein to the positions of elements (e.g., "top," "bottom," "above," "below") are merely used to describe the orientation of various elements in the FIGURES. It should be noted that the orientation of various elements may differ according to other exemplary embodiments, and that such variations are intended to be encompassed by the present disclosure.

Although the figures and description may illustrate a specific order of method steps, the order of such steps may differ from what is depicted and described, unless specified differently above. Also, two or more steps may be performed concurrently or with partial concurrence, unless specified differently above. Such variation may depend, for example, on the software and hardware systems chosen and on designer choice. All such variations are within the scope of the disclosure. Likewise, software implementations of the described methods could be accomplished with standard programming techniques with rule-based logic and other logic to accomplish the various connection steps, processing steps, comparison steps, and decision steps.

It is important to note that the construction and arrangement of the HVAC actuator and assembly thereof as shown in the various exemplary embodiments is illustrative only. Additionally, any element disclosed in one embodiment may be incorporated or utilized with any other embodiment disclosed herein. For example, the partial stroke test depicted in FIG. 16 may be executed by receiving instructions via the UART test system 1400, according to some embodiments, or may be executed by receiving instructions via the NFC device 518 according to some embodiments. Although only one example of an element from one embodiment that can be incorporated or utilized in another embodiment has been described above, it should be appreciated that other elements of the various embodiments may be incorporated or utilized with any of the other embodiments disclosed herein.

## Claims

1. An actuator comprising:
- a motor configured to rotate a valve positioned in a conduit;
- an actuator controller operatively connected to the motor, the actuator controller including a processing circuit, the processing circuit including a processor and memory, the memory storing instructions that, when executed by the processor, cause the processor to perform operations, the operations comprising:
- identifying a condition for performing a partial stroke test of the valve; and
- performing the partial stroke test of the valve by:
- controlling the motor to rotate the valve from a first position prior to the partial stroke test towards a second position; and
- controlling the motor to rotate the valve back to the first position.

2. The actuator of claim 1,
wherein the second position is within a dead space for the valve,
wherein controlling the motor to rotate the valve from the first position towards the second position and controlling the motor to rotate the valve back to the first position preferably comprise:
- controlling the motor to rotate the valve from the first position prior to the partial stroke test towards the second position within the dead space for the valve; and
- while the valve is located in the dead space, controlling the motor to rotate the valve back to the first position, to maintain a fluid flow condition for the conduit during the partial stroke test of the valve.

3. The actuator of claim 1 or 2,
wherein the operations further comprise:
- monitoring a duration in which the valve is positioned in the first position, wherein the condition is the duration exceeding a threshold.

4. The actuator of one of claims 1 to 3,
wherein the operations further comprise:
- determining whether the valve moved from the first position towards the second position,
wherein controlling the motor to rotate the valve back to the first position is preferably performed responsive to determining whether the valve moved from the first position towards the second position.

5. The actuator of claim 4,
wherein the operations further comprise:
- issuing one or more notifications indicating a malfunction of the valve based on the partial stroke test.

6. The actuator of claim 4,
wherein determining whether the valve moved from the first position towards the second position comprises:
- monitoring an armature position of the motor; and
- determining, based a change in the armature position, that the valve moved from the first position towards the second position.

7. A system, comprising:
- a valve configured to be positioned in a conduit and having a range of motion;
- an actuator including a motor configured to rotate the valve between a stopping position for a first position at one end of the range of motion and a stopping position for a second position at an opposite end of the range of motion; and
- an actuator controller operatively connected to the motor, the actuator controller including a processing circuit, the processing circuit including a processor and memory, the memory storing instructions that, when executed by the processor, cause the processor to perform operations, the operations comprising:
- identifying a condition for performing a partial stroke test of the valve; and
- performing the partial stroke test of the valve by:
- controlling the motor to rotate the valve from the first position towards a second position; and
- controlling the motor to rotate the valve back to the first position.

8. The system of claim 7,
wherein the valve is rotated from the first position towards the second position and back to the first position while maintained in a dead space for the valve during the partial stroke test,
wherein, while the valve is maintained in the dead space, a fluid flow condition for the conduit is preferably maintained during the partial stroke test of the valve.

9. The system of claim 7 or 8,
wherein the operations further comprise:
- monitoring a duration in which the valve is positioned in the first position, wherein the condition is the duration exceeding a threshold.

10. The system of one of claims 7 to 9,
wherein the operations further comprise:
- determine whether the valve moved from the first position towards the second position, wherein controlling the motor to rotate the valve back to the first position is performed responsive to determining whether the valve moved from the first position towards the second position,
wherein determining whether the valve moved from the first position towards the second position preferably comprises:
- monitoring an armature position of the motor; and
- determining, based a change in the armature position, that the valve moved from the first position towards the second position.

11. A method of controlling an actuator, the method comprising:
- identifying a condition for performing a partial stroke test of a valve positioned in a conduit; and
- performing the partial stroke test of the valve within a dead space of the valve to maintain a fluid flow condition of the conduit by:
- controlling a motor of an actuator, the motor configured to drive the valve, to rotate the valve from a first position prior to the partial stroke test towards a second position; and
- controlling the motor to rotate the valve back to the first position.

12. The method of claim 11, further comprising:
- monitoring a duration in which the valve is positioned in the first position, wherein the condition is the duration exceeding a threshold.

13. The method of claim 11 or 12, further comprising:
- determining whether the valve moved from the first position towards the second position,
wherein controlling the motor to rotate the valve back to the first position is preferably performed responsive to determining whether the valve moved from the first position towards the second position.

14. The method of claim 13, further comprising:
- issuing one or more notifications indicating a malfunction of the valve based on the partial stroke test.

15. The method of claim 13 or 14,
wherein determining whether the valve moved from the first position towards the second position comprises:
- monitoring an armature position of the motor; and
- determining, based a change in the armature position, that the valve moved from the first position towards the second position.
